# EUROPÄISCHE PATENTSCHRIFT

(11) **EP 2 691 912 B1**
(45) Veröffentlichungstag und Bekanntmachung des Hinweises auf die Patenterteilung: **20.05.2015**
(21) Anmeldenummer: 12708683.3
(22) Anmeldetag: 14.03.2012
(51) Int. Cl.: G06K 7/08, G06K 19/00, G06F 3/044

(54) **VERFAHREN ZUR INTERAKTION EINES DATENTRÄGERS MIT EINEM ENDGERÄT**
METHOD FOR A DATA STORAGE MEDIUM TO INTERACT WITH A TERMINAL
PROCÉDÉ POUR L'INTERACTION D'UN SUPPORT DE DONNÉES AVEC UN TERMINAL

(30) Priorität: 30.03.2011 DE 102011015571
(43) Veröffentlichungstag der Anmeldung: 05.02.2014
(73) Patentinhaber: Giesecke & Devrient GmbH, 81677 München (DE)
(72) Erfinder: BALDISCHWEILER, Michael, 81825 München (DE); WEIß, Dieter, 81825 München (DE)
(86) Internationale Anmeldenummer: PCT/EP2012/001142
(87) Internationale Veröffentlichungsnummer: WO 2012/130391

(56) Entgegenhaltungen:
- DE-A1-102007 000 874
- US-A1- 2006 047 971
- US-B1- 6 173 899

## Beschreibung

Die Erfindung betrifft ein Verfahren zur Interaktion eines tragbaren Datenträgers, wie z.B. einer Chipkarte, einem Wertdokument, einer Banknote mit einem Chip, einer Ausweiskarte, einer Bezahlkarte, einer Eintrittskarte oder dergleichen, mit einem Endgerät. Unter einem Endgerät wird bspw. ein Computer, ein Notebook oder Laptop, eine Kasse eines Kassensystems oder ein Handgerät, wie z.B. ein Handy, ein Tablet-PC oder ein Prüfgerät, verstanden. Die Erfindung betrifft weiterhin einen tragbaren Datenträger sowie ein Endgerät der oben bezeichneten Art. Ferner betrifft die Erfindung ein System zur Interaktion eines tragbaren Datenträgers mit einem Endgerät.

Es sind Verfahren bekannt, bei denen ein Sicherheitselement eines tragbaren Datenträgers mittels Auflegens auf ein Display eines Endgeräts überprüft wird. In der WO 2009/019038 A1 wird die Überprüfung eines Datenträgers beschrieben, der ein als lichtdurchlässiger Bereich ausgebildetes Fensterelement umfasst. In dem Fensterelement ist eine Information in Form einer sichtbaren oder nicht sichtbaren Struktur ausgebildet. Zur Verifikation des Datenträgers wird ein Display eines Computers, d.h. ein übliches PC-Display oder das Display eines Handgerätes, verwendet. Um eine Verifikation des Datenträgers durchzuführen, wird das Fensterelement mit der darin ausgebildeten Strukturinformation über einen bestimmten Bereich des Displays platziert. Auf dem Display erfolgt eine Anzeige, die mit der Strukturinformation in dem Fensterelement des Datenträgers korreliert ist. Durch die Übereinanderanordnung der beiden Teilinformationen wird in dem Fensterelement des Datenträgers eine versteckte Information sichtbar, anhand derer der Datenträger verifizierbar ist.

Voraussetzung für die Funktionsfähigkeit dieses Sicherheitskonzeptes ist eine hinreichend genaue Übereinanderanordnung von Fensterelement und angezeigter Information auf dem Display. Darüber hinaus eignet sich das beschriebene Vorgehen nicht dazu, die Art oder den Typ des zu verifizierenden Datenträgers automatisiert ausfindig zu machen. Ist der Datenträger zum Beispiel ein Geldschein mit einem Fensterelement, so ist dem Endgerät unbekannt, welcher Geldschein auf dem Display zur Verifikation aufliegt.

Aus der CN 101819623 A ist ein Speicherdatenträger mit einem IC entnehmbar, der über einen Satz kapazitiver Verbindungensstellen verfügt, mittels derer er durch ein Lesegerät mit berührungsempfindlichem Display ausgelesen werden kann. Ein Paar Verbindungsstellen dient dabei zur Energieversorgung des Datenträgers, ein weiteres Paar zum Auslesen von auf dem Datenträger gespeicherter Information durch das Lesegerät. Die Lösung vereinfacht die Handhabung eines Speicherdatenträgers beim Auslesen von Information. Die Realisierung einer kapazitiven Energieversorgung ist allerdings aufwendig.

US 6 173 899 B1 offenbart kapazitive Geberelemente zur Energieversorgung eines kontaktlosen Datenträgers.

Es ist Aufgabe der vorliegenden Erfindung, ein Verfahren anzugeben, welches die oben genannten. Probleme löst und gleichzeitig eine größere Flexibilität bei der Interaktion eines tragbaren Datenträgers mit einem Endgerät ermöglicht. Es ist weiterhin Aufgabe der vorliegenden Erfindung, einen Datenträger und ein Endgerät anzugeben, welche eine flexible und sichere Interaktion miteinander ermöglichen.

Diese Aufgaben werden gelöst durch ein Verfahren gemäß den Merkmalen des Patentanspruches 1 sowie einen Datenträger gemäß den Merkmalen des Patentanspruches 13 und ein Endgerät gemäß den Merkmalen des Patentanspruches 16.

Vorteilhafte Ausgestaltungen ergeben sich aus den abhängigen Patentansprüchen.

Die Erfindung schafft ein Verfahren zur Interaktion eines tragbaren Datenträgers mit einem Endgerät mit kapazitivem Display. Unter einem tragbaren Datenträger werden dabei insbesondere eine Chipkarte, ein Wertdokument, eine Banknote mit Chip, eine Ausweiskarte, eine Bezahlkarte, eine Eintrittskarte und dergleichen verstanden. Ein Endgerät im Sinne der Erfindung ist bspw. ein Computer, ein Notebook oder Laptop, ein Handgerät, wie z.B. ein Mobilfunkgerät, ein Tablet-PC, eine Kasse eines Kassensystems, usw.

Die Interaktion geschieht bevorzugt zum einen in der Weise, dass ein Endgerät die genaue Lage eines Datenträgers auf dem Display bestimmt und eine Anzeige erzeugt, die auf diese Lage genau abgestimmt ist. So kann etwa eine textuelle Anzeige erfolgen, deren Ausrichtung genau der einer Hauptachse eines Datenträgers entspricht.

In bevorzugter Ausführung wird im Rahmen der Interaktion ferner ein Rückkanal von einem Endgerät zu einem Datenträger aufgebaut, über den das Endgerät Daten an den Datenträger senden kann, so dass eine bidirektionale Kommunikation zwischen einem Datenträger und einem Endgerät möglich wird.

Der Datenträger umfasst eine Geberanordnung mit mindestens einem oder einem Satz von kapazitiven Geberelementen, welche in Bezug auf die Geometrie des Datenträgers an definierten Positionen auf oder in dem Datenträger angeordnet sind.

Unter einem Geberelement des Datenträgers ist eine zusätzliche kapazitive Fläche zu verstehen, die mit einer als integrierte Schaltung (Integrated Chip IC) ausgebildeten Ansteuervorrichtung verbunden ist. Durch Ansteuerung der Geberelemente können Signale erzeugt werden, die von dem Display des Endgerätes aufgenommen und als Eingangssignale ausgewertet werden. Indem die Geberlemente als Sensoren betrieben und das Display geeignet angesteuert wird, kann ein Rückkanal von einem Endgerät zu einem Datenträger aufgebaut werden.

Der Datenträger umfasst weiter eine Schnittstelle zur Kommunikation mit einem Endgerät, vorzugsweise eine kontaktlose Schnittstelle. Insbesondere bei Ausführung als Banknote ist die Schnittstelle bevorzugt als reine Kontaktlosschnittstelle ausgebildet.

Der Datenträger umfasst weiter eine eigene Energieversorgung, welche unter anderem die Energie zum Betrieb der Geberanordnung bereitstellt. Die Energieversorgung arbeitet unabhängig von der Geberanordnung. Sie ist zweckmäßig in Gestalt einer autarken Energieversorgung, z.B. als Batterie, ausgebildet oder erfolgt über die kontaktlose Schnittstelle.

Der Datenträger kann auch eine zusätzliche kontaktbehaftete Schnittstelle umfassen. Derartige Datenträger mit kontaktbehafteter und Kontaktlosschnittstelle werden als Dual-Interface-Datenträger bezeichnet; sie umfassen typischerweise ein Kontaktfeld und eine Spule.

Das Endgerät umfasst ein kapazitives Display mit einer berührungsempfindlichen Anzeige. Displays dieser Art sind inzwischen weit verbreitet und werden vor allem in leistungsfähigen Handys ("Smart Phones") oder in-Tablet-PCs eingesetzt. Kapazitive Displays nutzen die Ableitung angelegter Spannungen auf jeweiligen Sensorflächen des Displays. Die Oberfläche eines Glasträgers des Displays besteht hierbei aus Kapazitäten, die je nach Berührung des Fingers ihren Wert verändern. Diese Änderung wird von einer mit dem Display gekoppelten Logik ermittelt und in Koordinaten des Displays umgerechnet.

Erfindungsgemäß erzeugt der Datenträger über die kapazitiven Geberelemente Signale, die bei auf das Display aufgelegtem Datenträger von dem Display des Endgerätes aufgenommen und durch das Endgerät als Eingangssignale ausgewertet werden. Das Endgerät leitet durch Auswertung der Signale der Geberelemente die genaue Lage des Datenträgers auf dem Display ab und führt wenigstens eine Aktion aus, die auf der Kenntnis der genauen Lage des Datenträgers auf dem Display beruht. Die Bereitstellung der Energie zur Ansteuerung der Geberelemente erfolgt dabei über eine kontaktlose Schnittstelle oder stammt aus einer eigenen Energieversorgung des Datenträgers.

Die Erfindung schafft weiterhin einen Datenträger zur Interaktion mit einem Endgerät. Der Datenträger umfasst eine Geberanordnung mit mindestens einem oder einem Satz von kapazitiven Geberelementen, welche in Bezug auf die Geometrie des Datenträgers an vordefinierten Positionen auf oder in dem Datenträger angeordnet sind. Ferner umfasst der Datenträger mindestens eine kontaktlose Schnittstelle und eine eigene Energieversorgung.

Der Datenträger kann in Gestalt einer Dual-Interface-Karte vorliegen, in welchem Fall er neben der kontaktlosen Schnittstelle zusätzlich eine kontaktbehaftete Schnittstelle aufweist. Auch kann vorgesehen sein, den Datenträger mit einer NFC Einheit für eine Nahfeldkommunikation (Near Field Communication, NFC) zu versehen, die neben der Bereitstellung eines Datenübertragungskanals auch zur Energieversorgung der Komponenten des Datenträgers dienen kann.

Die Erfindung schafft weiterhin ein Endgerät zur Interaktion mit einem erfindungsgemäßen Datenträger. Das Endgerät, bspw. ein Computer, ein Laptop oder Notebook, ein Tablet-PC, ein Mobilfunktelefon, eine Kasse eines Kassensystems, usw., ist dazu ausgebildet, durch Auswertung der Signale der Geberelemente des erfindungsgemäßen Datenträgers die genaue Lage des Datenträgers auf dem Display abzuleiten.

Weiter schlägt die Erfindung ein System zur Interaktion eines tragbaren Datenträgers mit einem Endgerät vor, welches mindestens einen erfindungsgemäßen Datenträger sowie mindestens ein erfindungsgemäßes Endgerät umfasst.

In einer technisch besonders leicht umsetzbaren Ausführung umfasst der Datenträger eine kontaktbehaftete Schnittstelle mit mehreren Kontaktfeldern. Der Datenträger ist gemäß dieser Ausführung als Dual-Interface-Datenträger ausgebildet. Die Kontaktfelder der kontaktbehafteten Schnittstelle werden erfindungsgemäß als kapazitive Geberelemente verwendet, an denen die Signale für das Display erzeugt werden. Hierzu ist es erforderlich, dass der Datenträger mit der kontaktbehafteten Schnittstelle nach unten auf das Display aufgelegt wird, so dass mittels des kapazitiven Displays des Endgeräts Signale der als kapazitive Geberelemente dienenden Kontaktfelder erfasst und als Eingangssignale ausgewertet werden können.

Wahlweise werden die kapazitiven Geberelemente einzeln oder gemeinsam angesteuert. Die Geberelemente sind in Bezug auf die Geometrie des Datenträgers an definierten Positionen angeordnet. Die Geberelemente können verteilt über die Fläche des Datenträgers vorgesehen sein. Sie können ebenfalls räumlich konzentriert und in Bezug auf einzelne Komponenten definiert zu diesen auf oder in dem Datenträger vorgesehen sein.

Zur Ansteuerung der Geberelemente werden durch eine Ansteuervorrichtung Ladungsänderungen, insbesondere in einer Größenordnung in einem Bereich von 2 pF bis 1 nF, auf den Geberelementen hervorgerufen. Die zur Ansteuerung der Geberelemente benötigte Energie wird der internen Energieversorgung des Datenträgers entnommen oder über induktive Kopplung durch die kontaktlose Schnittstelle von dem Endgerät übertragen. Eine ausreichende Energieversorgung wird dabei bei bekannten Endgeräten, wie Mobilfunkendgeräte, Tablet-PCs und ähnlichen, auch dann zuverlässig erreicht, wenn die Antenne des Endgerätes auf der von dem Display abgewandten Seite des Endgerätes angeordnet ist.

In einer weiteren zweckmäßigen Ausgestaltung umfasst der Datenträger ein Fensterelement, in Bezug auf das die Geberelemente an vordefinierten Positionen auf oder in dem Datenträger angeordnet sind. Unter einem Fensterelement wird hierbei ein lichtdurchlässiger Bereich verstanden, wie dieser in der WO 2009/019038 A1 der Anmelderin beschrieben ist. Der Inhalt dieser Druckschrift wird durch Bezugnahme in die Beschreibung der Erfindung aufgenommen. Gemäß der in der WO 2009/019038 A1 gegebenen Definition ist in dem lichtdurchlässigen Bereich eine erste Information angeordnet. Eine zweite Information wird mindestens bereichsweise in dem separaten Display des Endgeräts angezeigt. Entweder in der ersten oder der zweiten Information oder auch in beiden Informationen ist eine weitere Information versteckt, die für einen Betrachter ohne Hilfsmittel nicht oder nur kaum erkennbar und/oder lesbar ist. Eine Verifikation des Datenträgers erfolgt, indem die erste Information im transluzenten Bereich des Datenträgers über die zweite Information des Displays gelegt wird und die versteckte Information als Muster und/ oder als Metamerie erkennbar und/ oder lesbar wird.

Bei dem erfindungsgemäßen Verfahren ist vorgesehen, dass das Endgerät durch Auswertung der Signale der Geberelemente die genaue Lage des Datenträgers auf dem Display ableitet und auf dem Display eine inhaltliche Information ausgibt, die lagerichtig zu dem Datenträger und dem Fensterelement ist. Ein Vorteil dieser Vorgehensweise ist, dass die Übereinanderanordnung von Fensterelement des Datenträgers und Displayanzeige, nunmehr nicht mehr manuell vorgenommen werden muss. Vielmehr wird die Position des Fensterelementes mit der darin enthaltenen ersten Information anhand der bzgl. des Fensterelementes definiert angeordneten Geberelemente durch das Display selbsttätig ermittelt. Die Übereinanderanordnung von erster und zweiter Information in dem Fensterelement und dem Display kann dadurch präziser erfolgen.

Die auf dem Display des Endgeräts erzeugten Signale können inhaltliche Informationen beinhalten. Sie erlauben es dem Endgerät insbesondere, die genaue Lage des Datenträgers bzw. des in dem Datenträger angeordneten Fensterelementes abzuleiten. Aufgrund der ermittelten Position des Fensterelementes kann das Endgerät auf seinem Display eine zu dem Fensterelement genau lagerichtige Anzeige erzeugen. Die Existenz einer lagerichtigen Anzeige bildet bei einem Datenträger mit Fensterelement eine wesentliche Rückmeldung für einen Benutzer, dass der Datenträger und das Display bzw. Endgerät zusammen arbeiten. Bei Banknoten mit einem Fensterelement erlaubt die Anzeige insbesondere eine Echtheitsprüfung. Die notwendige, endgerätseitige Anpassung an den Datenträger kann durch entsprechende Software, etwa durch das Einspeichern von Applets (d.h. einer entsprechenden Applikation) erfolgen.

In einer weiteren Ausgestaltung erfolgt über die Geberelemente ein Signalaustausch von dem Display zu dem Datenträger, indem die Geberelemente als Sensoren betrieben und durch das Display ortsabhängig Signale erzeugt werden, die von den als Sensoren betriebenen Geberelementen erfasst und durch den Datenträger als Eingangssignale ausgewertet werden. Hierdurch kann ein Rückkanal von dem Endgerät über sein Display zu dem Datenträger realisiert werden. Die Geberelemente 11,12,13,14 können dabei einzeln angesprochen und damit eine komplexere und schnelle Signalübertragung realisiert werden.

In einer besonders einfachen Ausgestaltung des Rückkanals kann dieser dadurch realisiert sein, dass die kapazitive Ansteuerung des Displays des Endgeräts insgesamt an- und ausgeschaltet und diese Ein- und Ausschaltvorgänge von der Geberelementen erfasst werden. Dabei kann das Display zur Anzeige von Information aktiviert bleiben, lediglich die Ansteuerung zur Benutzereingabe wird deaktiviert. Die eigentliche Signalübertragung kann dabei z.B. durch das Verhältnis von Einschaltzeit zur Gesamtdauer einer festgelegten Zeiteinheit realisiert sein, wobei Einschaltzeiten, die kleiner sind als ein bestimmter Referenzwert z.B. als logisch "0" und Einschaltzeiten größer dem Referenzwert als logisch "1" gewertet werden, wodurch Signale vom Endgerät zum Datenträger übermittelt werden können.

Der Rückkanal kann in einer vorteilhaften alternativen Ausführungsvariante auch durch Zusammenwirken eines in dem Datenträger ausgebildeten Beschleunigungssensors mit einer in dem Endgerät eingerichteten, auf das Display wirkenden Vibrationsvorrichtung realisiert sein. Durch entsprechende Ansteuerung der Vibrationsvorrichtung wird ein Signal erzeugt, das von dem Beschleunigungssensor erfasst wird.

Die Einrichtung des Rückkanals auf dem Endgerät kann häufig vorteilhaft durch eine Software-Anpassung erfolgen, ohne dass Hardware-Änderungen erforderlich wären. Beispielsweise kann hierzu in dem Datenträger ein Applet bereitgestellt werden, das von dem Datenträger an das Endgerät übertragen wird. Von praktischer Bedeutung ist die Nutzung des Rückkanals von dem Endgerät zu dem Datenträger insbesondere für als Karten ausgebildete Datenträger, wie z.B. Bezahlkarten, Eintrittskarten, Wertkarten usw.

In einer vorteilhaften Weiterbildung ist der erfindungsgemäße Datenträger mit Zustimmungsvorrichtung ausgestattet, die bewirkt, dass eine Signalübertragung zwischen Datenträger und Display bei aufgelegtem Datenträger nur erfolgt, wenn ein Benutzer durch eine bestimmte Handlung dies bestätigt. Zweckmäßig kann die Zustimmungsvorrichtung insbesondere eine Rückkontaktfläche umfassen, über die ein Benutzer durch gleichzeitiges Berühren einer mit dem Display verbundenen Außenkontaktfläche einen Stromkreis schließt, dessen Geschlossenheit Voraussetzung für die Möglichkeit von Kapazitätsänderungen zwischen Datenträger und Display und damit für eine Signalübertragung ist.

Neben einer schnellen und genauen Prüfung der Echtheit eines Datenträgers, insbesondere einer Banknote, mittels eines als Prüfgerät ausgebildeten Endgerätes, erlaubt das erfindungsgemäße Verfahren eine Reihe von grundlegenden Werttransaktionen. Diese erfordern, wie einleitend beschrieben, das Auflegen des Datenträgers auf das kapazitive Display des Endgerätes.

In einer ersten Variante werden zur Durchführung einer sicherheitskritischen Transaktion an dem Endgerät Transaktionen an einen Rechner übertragen, der die Transaktionsdaten mit einem für den Datenträger spezifischen Schlüssel als Bild verschlüsselt und zusammen mit einer Transaktionsnummer über einen separaten Kanal an das Endgerät überträgt, wobei die bildverschlüsselten Daten auf dem Display des Endgeräts angezeigt werden. Der separate Kanal kann bspw. eine SMS (Short Message Service) sein. Zweckmäßigerweise erfolgt nur bei lagerichtiger Überlagerung des Fensterelementes mit den auf dem Display angezeigten bildverschlüsselten Daten eine Entschlüsselung der bildverschlüsselten Daten.

Zur Durchführung der Werttransaktion gemäß der ersten Variante wird ein erfindungsgemäßer Datenträger mit einer Geberanordnung und einem optionalen Fensterelement benötigt.

In einer zweiten Transaktionsvariante braucht der Datenträger kein Fensterelement aufzuweisen. Zur Durchführung einer sicherheitskritischen Transaktion an dem Endgerät gemäß einer zweiten Variante werden Transaktionsdaten von dem Endgerät über die kontaktlose Schnittstelle an den Datenträger übertragen.

In einer alternativen, dritten Variante, bei der ein Datenträger mit Geberanordnung und Rückkanal eingesetzt wird, werden zur Durchführung einer sicherheitskritischen Transaktion an dem Endgerät Transaktionsdaten über die Geberelemente des Datenträgers an den Datenträger übertragen.

Bei der zweiten und dritten Variante kann weiter vorgesehen sein, dass durch den Datenträger eine für die Transaktion spezifische Transaktionsnummer erzeugt und wahlweise über die kontaktlose Schnittstelle oder die Geberelemente an das Endgerät übertragen wird, welches die Transaktionsdaten zusammen mit der Transaktionsnummer an einen Rechner zur weiteren Verarbeitung, insbesondere über einen gesicherten Kanal, überträgt.

Weist der Datenträger ein Fensterelement auf, kann dieses in einfacher Weise dazu genutzt werden, die Funktionsfähigkeit des Datenträgers zu beweisen, indem z.B. die auf dem Display eines Endgerätes wiedergegebenen Transaktionsdaten so ausgerichtet werden, dass sie genau in dem Fensterelement des Datenträgers erscheinen. Eine solche Ausrichtung ist selbstständig durch den Datenträger nur möglich, wenn die durch den Datenträger angesteuerten Geberelemente des Datenträgers bestimmungsgemäß funktionieren. Diese Funktionalität stellt dann den Beweis dar, dass der Datenträger in erwarteter Weise arbeitet.

Die Übertragung der Transaktionsdaten kann dabei über die kontaktlose Schnittstelle, bspw. über die NFC Schnittstelle erfolgen. Über den Rückkanal erfolgt eine Authentisierung zwischen dem Datenträger und dem Endgerät.

In einer weiteren Variante kann auch eine Authentisierung zwischen dem Datenträger und dem Endgerät über die kontaktlose Schnittstelle, bspw. die NFC Schnittstelle, erfolgen. Weist ein Datenträger eine NFC Schnittstelle auf, so kann diese zusätzlich zu einer anderen kontaktlosen Schnittstelle vorgesehen sein. Die beiden beschriebenen Varianten sind insbesondere dann sinnvoll, wenn das Endgerät über eine besonders gesicherte Ausführungsumgebung verfügt. Eine solche gesicherte Ausführungsumgebung eines Datenträgers stellt bspw. das Betriebssystem MobiCore der Anmelderin dar, welches in gesicherten Laufzeitumgebungen von Datenträgern zum Einsatz kommt. Als gesicherte Laufzeitumgebung kann bspw. eine ARM® Trust Zone® verwendet werden.

Die Erfindung wird nachfolgend näher anhand von Ausführungsbeispielen erläutert. Die Darstellungen in den Figuren sind des besseren Verständnisses wegen schematisiert und spiegeln nicht die realen Gegebenheiten wider. Dazu sind die beschriebenen Ausführungsformen der besseren Verständlichkeit wegen auf die wesentlichen Kerninformationen reduziert. Die in den Figuren gezeigten Proportionen entsprechend ebenfalls nicht den in der Realität vorliegenden Verhältnissen und dienen ausschließlich zur Verbesserung der Anschaulichkeit. Es zeigen:
- Fig.1: eine schematische Darstellung eines erfindungsgemäßen Datenträgers in Gestalt einer Karte,
- Fig. 2: eine schematische Teildarstellung eines Endgerätes mit den für die Erfindung wesentlichen Elementen,
- Fig. 3: einen erfindungsgemäßen Datenträger in Gestalt einer Banknote,

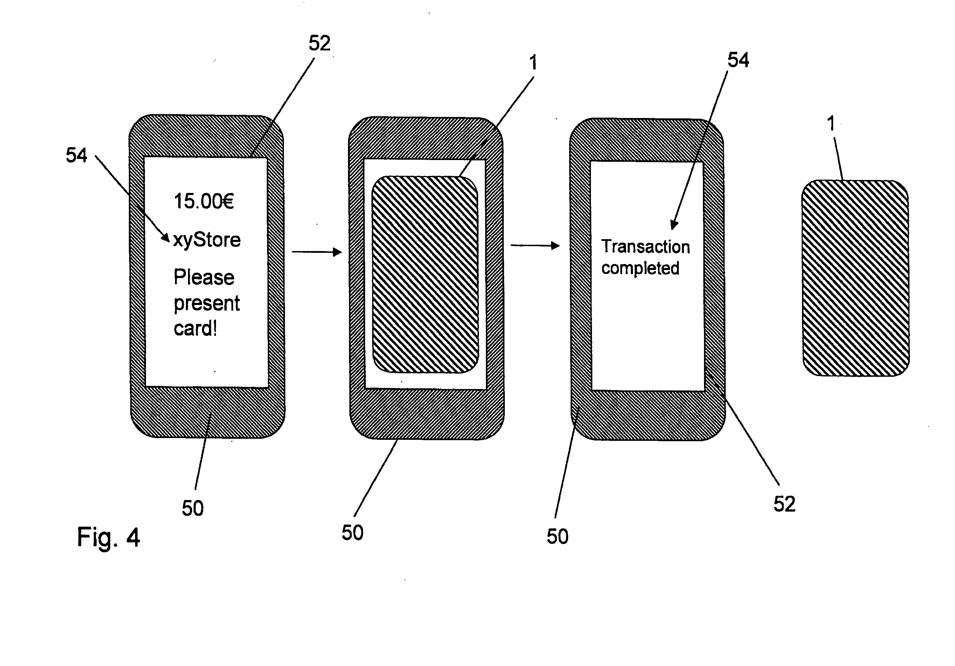

- Fig. 4: eine schematische Darstellung des Ablaufs einer Werttransaktion unter Verwendung des erfindungsgemäßen Verfahrens, und
- Fig. 5: eine schematische Darstellung einer Zustimmungsvorrichtung.

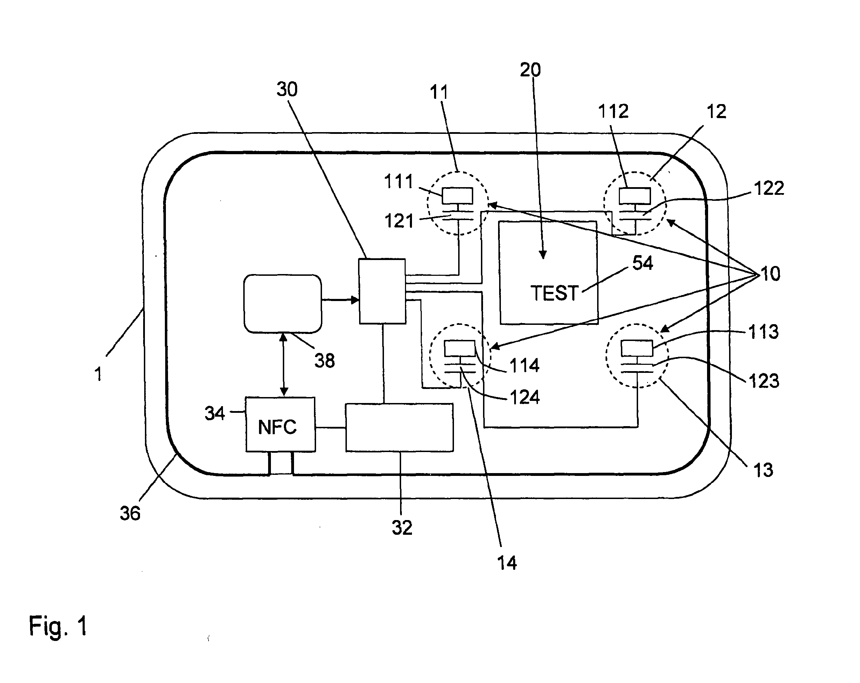

Fig.1 zeigt ein erstes Ausführungsbeispiel eines erfindungsgemäßen tragbaren Datenträgers 1. Der tragbare Datenträger 1 ist grundsätzlich ein in Baugröße und Ressourcenumfang reduzierter Computer, der einen Mikrocontroller und mindestens eine Schnittstelle zur Kommunikation mit einem externen Gerät aufweist. Häufig besitzt er keine oder nur eine rudimentäre eigene Nutzerdatenausgabe. Der Mikrocontroller besitzt typischerweise eine Baugröße von wenigen mm² und ist alleine durch seine geringe Baugröße in seiner Leistungsfähigkeit sowohl hinsichtlich Datenverarbeitungsleistung wie hinsichtlich Speicherkapazität gegenüber herkömmlichen PCs stark beschränkt. Seine äußere Bauform ist so gestaltet, dass er von einem Benutzer leicht zu jeder Zeit mitgeführt werden kann. Typische Ausführungsformen für einen tragbaren Datenträger sind etwa eine Chipkarte (Karte), eine Bezahlkarte, eine Eintrittskarte oder dergleichen. Der tragbare Datenträger kann auch in Gestalt einer Banknote, eines Passes oder eines anderen Wertdokumentes realisiert sein.

In einer ersten Ausführungsform ist der Datenträger 1 beispielhaft als sogenannte Dual-Interface-Karte ausgebildet und verfügt über eine kontaktlose sowie eine kontaktbehaftete Schnittstelle zur Kommunikation mit einem - in Fig. 1 nicht dargestellten - Endgerät. Die kontaktlose Schnittstelle wird durch eine Antenne 36 und einen NFC (Near Field Communication)-Schaltkreis (Chip) 34 repräsentiert. Mt dem Bezugszeichen 38 ist ein Kontaktelement der kontaktbehafteten Schnittstelle bezeichnet. In seiner bestimmungsgemäßen Funktion ist das Kontaktelement für die hier vorgeschlagene Verwendung des Datenträgers 1 allerdings grundsätzlich ohne Bedeutung.

Mit 32 ist eine Einheit zur Energieversorgung des Datenträgers dargestellt. Im Ausführungsbeispiel der Fig.1 leitet sie ihre Energie von dem NFC Chip 34 ab. D.h. die Energieversorgung erfolgt induktiv über die Antenne 36. Alternativ kann die Energieversorgung 32 auch in Form einer autarken Energiequelle gebildet sein, z.B. durch eine Batterie oder durch einen Akku. Ebenso kann die Energieversorgung 32 durch eine Solarzelle gebildet sein, die durch Umgebungslicht oder insbesondere durch von einem Display eines Endgerätes abgegebenes Licht angetrieben sein kann; die Lichtabgabe durch ein Endgerät kann dabei gezielt für die Solarzelle erfolgen, etwa durch Erzeugung von Lichtblitzen. Zwischen dem NFC Chip 34 und dem Kontaktelement 38 kann ein Datenaustausch stattfinden. Bei Einsatz einer Batterie, eines Akkus oder einer Solarzelle kann eine kontaktlose Schnittstelle, soweit sie zur Energieübertragung dient, entfallen.

Der Datenträger 1 umfasst weiterhin eine Geberanordnung 10 mit mindestens einem kapazitiven Geberelement, wobei in der in Fig. 1 gezeigten Ausführung beispielhaft vier kapazitive Geberelemente 11,12,13,14 vorgesehen sind. Die Geberelemente 11,12,13,14 umfassen jeweils zum einen eine Kapazität 121,122,123,124 mit zwei kapazitiven Flächen, von denen jeweils eine mit einer Ansteuervorrichtung 30 verbunden sind; zum anderen umfassen die Geberelemente 11,12,13,14 jeweils eine Kontaktierungsfläche 111, 112,112,114. Die Kontaktierfläche 111, 112, 112, 114 ist in einer ersten Ausführung direkt auf einer Oberseite des Datenträgers 1 angeordnet, sodass beim Auflegen des Datenträgers 1 eine direkte Kontaktierung zur Oberfläche des Glasträgers des Displays 52 besteht. In einer alternativen Ausführung ist über der Kontaktierfläche eine Schutzfolie angeordnet.

Die Ansteuervorrichtung 30 kann z.B. als Teil eines Single Chip-Controllers für Chipkarten realisiert oder als separates Bauelement ausgebildet sein. Sie ist mit der Energieversorgung 32 verbunden. Die Ansteuervorrichtung 30 kann den Ladungszustand der Geberelemente 11,12,13,14 gezielt beeinflussen und insbesondere Energie zuführen. Die benötigte Energie bezieht sie dabei von der Energieversorgung 32. Die Geberelemente 11,12,13,14 sind in Bezug auf die Geometrie des Datenträgers 1, aber auch in Bezug auf ein in dem Datenträger 1 optional vorgesehenes Fensterelement 20 an definierten Positionen in oder auf dem Datenträger 1 angeordnet. Beispielhaft sind in Fig. 1 die Geberelemente 11,12,13,14 um das Fensterelement 20 herum plaziert. Anzahl und Anordnung der Geberelemente 11,12,13,14 können auch von der gezeigten Darstellung abweichen.

In dem in Fig. 1 gezeigten Ausführungsbeispiel sind separate Geberelemente 11,12,13,14 dargestellt. Bei der beispielhaft illustrierten Dual-Interface-Karte könnten aber in besonders vorteilhafter Weise auch die - nicht näher dargestellten - Kontaktfelder des Kontaktelements 38 als Kontaktierungsflächen der Geberelemente 11, 12, 13, 14 verwendet werden.

Die Geberelemente 11,12,13,14 können wahlweise einzeln oder gemeinsam angesteuert werden, wobei die Ansteuerung von der Verwendung des Datenträgers abhängig ist.

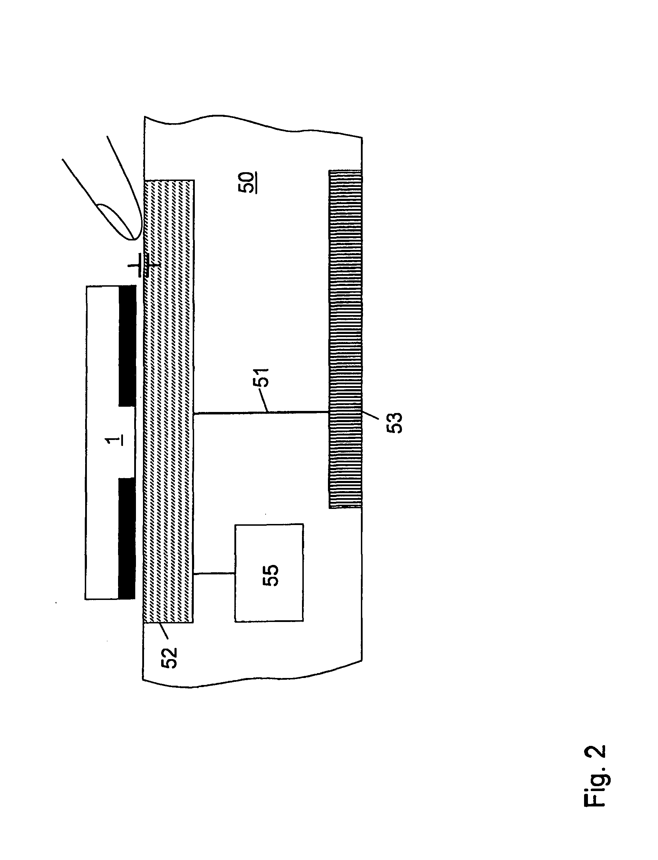

Der in Fig. 1 dargestellte Datenträger interagiert mit einem kapazitiven Display 52 eines Endgerätes 50, dessen hier relevante Grundelemente in Fig.2 stark schematisiert dargestellt sind. Das kapazitive Display 52 wird von einer Displaysteuereinheit 55 angesteuert. Die Displaysteuereinheit 55 wertet dabei, wie durch das Kondensatorsymbol angedeutet, kapazitive Veränderungen zwischen dem Display 52 und einem Gegenelement, insbesondere einem Finger oder einem Geberelement eines Datenträgers 1, aus. Vorgesehen sein kann weiter, dass das kapazitive Display 52 über eine geeignete Verbindung 51 elektrisch mit eine Außenkontaktfläche 53 verbunden ist, die an einer Außenseite des Endgerätes 50 so liegt, dass sie von einem Benutzer berührt werden kann. Die Außenkontaktfläche 53 kann in einfacher durch ein metallisches Gehäuse eines Endgerätes 50 realisiert sein, die Verbindung 51 kann durch Montage- oder Verbindungsmittel erfolgen. Viele Endgeräte 50 weisen eine entsprechende Einrichtung auf, ohne dass sie besonders eingerichtet werden muss. Endgeräte 50 weisen regelmäßig weitere Bestandteile und Komponenten auf, die für die hier beschriebene Erfindung aber nicht von Bedeutung und deshalb nicht gezeigt sind.

Das Endgerät 50 kann z.B. ein öffentlich zugängliches Terminal sein. Daneben kommen als Endgeräte 50 aber auch allgemein Computer, Laptops, Netbooks, Tablet-PCs, Mobilfunk-Endgeräte, PDAs und dergleichen infrage, die mittlerweile häufig mit kapazitiven Displays 52 ausgestattet sind.

Bei einem kapazitiven Display 52 wird die Display-Oberfläche kontinuierlich mit hoher Ortsauflösung auf kapazitive Änderungen abgetastet. Dazu wird ein geeignetes bekanntes Verfahren eingesetzt. Gemäß einem bekannten Verfahren werden unter Steuerung der Displaysteuereinheit 55 ortsabhängig aus Signalpaketen mit unterschiedlichen Amplituden bestehende Testsignalfolgen erzeugt. Veränderungen der Testsignalfolgen durch äußere Einflüsse, insbesondere durch kapazitive Beeinflussung durch Fingerberührung, werden durch von der Displaysteuereinheit 55 erfasst. Eine solche Veränderung kann auch durch die in dem Datenträger 1 dargestellten Geberelemente 11, 12,13,14 herbeigeführt werden, wobei einem bestehenden Kondensatorwert des kapazitiven Displays 52 ein weiterer durch die Geberelemente 11,12,13, 14 hinzugefügt wird.

Erfindungsgemäß erzeugt der Datenträger 1 über die kapazitiven Geberelemente 11,12,13,14 Signale, die bei auf das Display 52 aufgelegtem Datenträger von dem Display 52 des Endgeräts 50 aufgenommen und durch das Endgerät 50 als Eingangssignale ausgewertet werden.

Der Datenträger 1 wird dabei derart auf das Display 52 aufgelegt, dass die Kontaktierungsflächen 111,112,112,114 der Geberelemente 11,12,13,14 direkt auf dem Display 52 aufliegen. Die Ansteuerung der Geberelemente 11, 12,13,14 erfolgt, indem die Ansteuervorrichtung 30 durch gesteuerte Zufuhr von Energie aus der Energieversorgung 32 minimale Ladungsänderungen in den verbundenen kapazitiven Flächen der Geberelemente 11,12,13,14 und damit minimale Kapazitätsänderungen der Geberelemente 11,12,13,14 bewirkt. Die Größenordnung der Ladungsänderungen liegt zweckmäßig in einem Bereich von 2 pF bis 1 nF, jedoch sind auch bereits Ladungsänderungen von weniger als 2 pF bis zu 1 pF technisch verwertbar. Grundsätzlich unterstützten größere Werte die Qualität der Signalübertragung, während kleinere Werte kleinere Bauformen ermöglichen und sich insbesondere z.B. zur Realisierung der Erfindung in Banknoten eignen. Die Energie zur Ansteuerung der Geberelemente 11,12,13,14 kann der Datenträger 1 von dem Endgerät 50 über die Antennenspule 36 erhalten. Eine ausreichende Energieversorgung wird dabei auch dann erreicht, wenn die endgeräteseitige Antenne auf der von dem Display 52 abgewandten Geräterückseite angeordnet ist.

Das Endgerät 50 erfasst z.B. mittels Testsignalfolgen, wie vorstehend erläutert, die in den Geberelementen 11,12,13,14 bewirkten Ladungsänderungen und ermittelt daraus die genaue Position der Geberelemente 11,12,13,14 auf dem Display 52. Da die Geberelemente 11,12,13,14 in einem vorgegebenen Abstand bzw. in einer vorgegebenen Position zu dem Fensterelement 20 angeordnet sind, kann das Endgerät anhand dieser Information die genaue Position des Fensterelementes 20 bzw. die genaue Lage des Datenträgers 1 auf dem Display ermitteln. Zur Durchführung der Lagebestimmung kann in dem Endgerät 50 eine entsprechende Softwareapplikation, z.B. ein Applet vorgesehen sein, die von der Displaysteuereinheit 55 ausgeführt wird.

Es kann vorgesehen sein, dass dem Benutzer mit Hilfe von auf dem Display 52 ausgegebenen graphischen oder alphanumerischen Steuerinformationen angezeigt wird, in welche Richtung der Datenträger 1 relativ zu einer aktuellen Position des Datenträgers 1 verschoben werden muss, damit eine Positionsbestimmung erfolgen kann.

Die erfolgreiche Durchführung der Lageerfassung des Datenträgers 1 auf dem Display 52 wird dem Benutzer mitgeteilt. Hierzu können die Geberelemente 11,12,13,14 bspw. nacheinander z.B. im Uhrzeigersinn aktiviert werden und es kann z.B. eine auf das Fensterelement 20 abgestimmte Textausgabe vorgesehen sein, welche eine im Display 52 dargestellte Information 54 repräsentiert, in Fig. 1 etwa das Wort "TEST". Bei erfolgreicher Lageerkennung springt die dargestellte Information 54, also etwa das Wort "TEST", in richtiger Orientierung in den Bereich des Fensterelements 20. Die Orientierung wurde aus der Aktivierungsabfolge der der Geberelemente, im Uhrzeigersinn ermittelt.

Die eigentliche Signalübertragung kann dabei z.B. durch das Verhältnis von Einschaltzeit zur Gesamtdauer einer festgelegten Zeiteinheit, z.B. einer Schaltperiode, realisiert sein, wobei Einschaltzeiten, die kleiner sind als ein bestimmter Referenzwert z.B. als logisch "0" und Einschaltzeiten größer dem Referenzwert als logisch "1" gewertet werden. Durch eine noch genauere Auflösung des Verhältnisses von Einschaltzeit zu Zeiteinheit ist es weiter möglich, einzelne Geberelemente 11,12,13,14 individuell zu identifizieren. Dann kann z.B. ein in Aufsicht rechts oben angeordnetes Geberelement anhand eines bestimmten längeren oder kürzeren Verhältnisses von Einschaltzeit zu Zeiteinheit eindeutig erkannt werden, so dass eine Bestimmung der Orientierung eines Datenträgers 1 auch dann eindeutig möglich ist, wenn ein gerade Zahl von Geberelementen punkt- oder achsensymmetrisch auf dem Datenträger angeordnet ist.

In einer alternativen Ausführungsmöglichkeit könnte sich das Wort "TEST" innerhalb des Fensterelements 20 im Uhrzeigersinn drehen. Selbstverständlich ist die dargestellte Informationen 54 nicht auf Wortdarstellungen beschränkt, sondern kann eine beliebige graphische Darstellung sein; auch kann die Wiedergabe natürlich statisch erfolgen.

In einer sehr vorteilhaften Weiterbildungsform der Erfindung kann vorgesehen sein, dass zwischen Display 52 und Datenträger 1 über die Geberelemente 11,12,13,14 ein Rückkanal aufgebaut wird, über den das Endgerät 50 Signale zu dem Datenträger 1 überträgt.

Ein Rückkanal lässt sich realisieren, indem die Geberelemente 11,12,13,14 als Sensoren betrieben und das Display 52 geeignet angesteuert wird. Die Ansteuervorrichtung 30 ist in diesem Fall dazu eingerichtet, die Ladungszustände bzw. Kapazitätsänderungen der Geberelemente 11,12,13,14 zu erfassen und als Eingangssignale auszuwerten. In einer ersten Ausführungsform des Rückkanals werden durch entsprechende Ansteuerung der Testsignalfolgen ortsbezogene Signale für einen auf dem Display 52 aufgelegten Datenträger 1 erzeugt. Für die Ausbildung der Testsignalfolgen wird dabei die zuvor erkannte Lage des Datenträgers 1 genutzt. Die Geberelemente 11,12,13, 14 können auf diese Weise einzeln angesprochen und so eine komplexere und schnelle Signalübertragung realisiert werden. Die Signale werden von den datenträgerseitigen, als Sensoren betriebenen Geberelementen 11,12,13, 14 erfasst.

Alternativ kann der Rückkanal z.B. realisiert werden, indem das Display 52 insgesamt an- und ausgeschaltet wird und dies von der Ansteuervorrichtung 30 über die Geberelemente 11, 12, 13, 14 erfasst wird. Die eigentliche Signalübertragung kann dabei z.B. durch das Verhältnis von Einschaltzeit zur Gesamtdauer einer festgelegten Zeiteinheit realisiert sein, wobei Einschaltzeiten, die kleiner sind als ein bestimmter Referenzwert z.B. als logisch "0" und Einschaltzeiten größer dem Referenzwert als logisch "1" gewertet werden. Die Einrichtung des Rückkanals auf dem Endgerät 50 kann durch Software erfolgen, bspw. durch ein auf dem Endgerät 50 eingerichtetes Applet. Die Software kann dabei auch von dem Datenträger 1 bereitgestellt und von diesem an das Endgerät 50 übertragen werden.

In einer alternativen Ausgestaltung wird der Rückkanal durch Zusammenwirken einer Vibrationsvorrichtung und eines Beschleunigungssensors realisiert. Vibrationsvorrichtungen sind für Endgeräte bekannt und werden dort häufig zur Alarmierung eines Nutzers eingesetzt. Ebenso sind Beschleunigungssensoren für Datenträger bekannt, wo sie z.B. zu Feststellung von räumlichen Lageveränderungen dienen. Zur Realisierung eines Rückkanals wird der Datenträger 1 mit einem Beschleunigungssensor ausgerüstet und das Endgerät 50 mit einer Vibrationsvorrichtung. Diese wird durch eine entsprechende Software z.B. intermittierend angesteuert, wobei durch das Verhältnis der An- und Auszeiten eine Signalübertragung erfolgt.

Um sicherzustellen, dass das Auflegen eines Datenträgers 1 auf ein Display 52 durch einen Benutzer erfolgt, kann in einer weiteren Weiterbildung mit Hilfe einer Software oder einer Software-Erweiterung eines Endgerätes 50 auch ein Wechsel zwischen "berührt" und "nicht berührt" ausgewertet werden. Hierdurch kann sichergestellt werden, dass ein Benutzer einen Datenträger 1 aktiv auf ein Display 52 gelegt hat, etwa auf ein Display 52 einer Kassen- oder Bezahleinrichtung. Eine Relay-Attacke ist mit diesem Verfahren nicht mehr möglich.

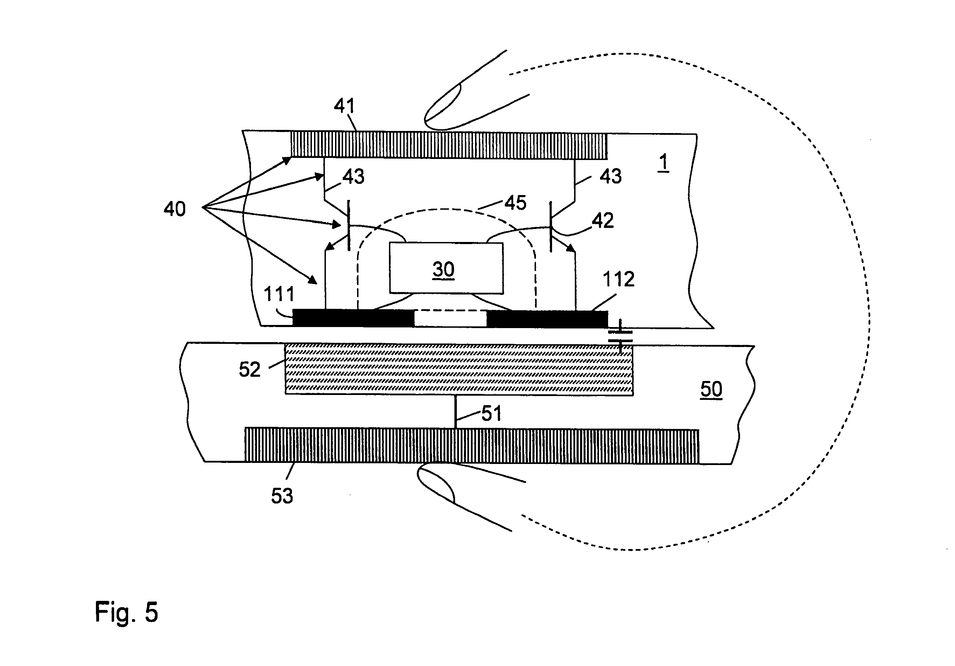

Um sicherzustellen, dass ein Datenaustausch zwischen einem Datenträger 1 und einem Endgerät 50 willentlich erfolgt, kann in einer Ausführungsvariante der Datenträger 1 eine Zustimmungsvorrichtung 40 aufweisen, wie sie in Fig. 5 schematisch dargestellt ist. Sie umfasst wenigstens eine Rückkontaktfläche 41, die auf der von den Geberelementen 111,112 abgewandten Rückseite des Datenträgers 1 ausgebildet ist, wenigstens einen elektrischen Schalter 42, der mit der Ansteuervorrichtung 30 verbunden ist, und eine über den Schalter 42 geführte elektrische Verbindung 43 zwischen der Rückkontaktfläche 41 und mindestens einem der Geberelemente 111, 112.

Die Rückkontaktfläche 41 kann z.B. auf Graphit oder Ruß basieren, oder aus einem leitfähigen Polymer bestehen, sie besitzt zweckmäßig eine mäßige elektrische Leitfähigkeit mit einem Widerstand von < 100 kΩ. Der Schalter 42 ist zweckmäßig ein Transistor, ein FET, ein Relais oder ein ähnliches Bauelement. Er kann als separates Bauelement oder als integrierter Bestandteil des Mikrocontrollers des Datenträgers 1 ausgeführt sein. Die elektrische Verbindung 43 kann z.B. mittels Drähten realisiert sein. Es kann eine Rückkontaktfläche 41 über einen oder mehrere Schalter 42 mit einem oder mehreren Geberelementen 111,112 verbunden sein oder es können auch mehrere Rückkontaktflächen 41 vorgesehen sein, die jeweils über einen zugeordneten Schalter 42 mit einer oder mehreren Geberelementen 111,112 verbunden sind. Die Geberelemente 111,112 entsprechen in Zahl und Anordnung grundsätzlich den Geberelementen 11,12,13,14 gemäß Fig. 1, umfassen aber anders als diese jeweils nur eine Kontaktierungsfläche 111,112, die mit dem oder den Schaltern 42 verbunden ist; eine zusätzlich Kapazität wie die Geberelemente 11,12,13,14 besitzen die Geberelemente 111,112 nicht. Die jeweils zweite kapazitive Fläche zur Realisierung einer Kapazität wird durch das Display 52 gebildet. Bei Ausführung des Datenträgers 1 als kontaktbehaftete Chipkarte sind die Kontaktierungsflächen 111,112 beispielsweise zweckmäßig durch die ohnehin vorhandenen Kontaktflächen realisiert. Die Ansteuervorrichtung 30 kann von einer Verkapselung 45 umgeben sein, in die auch weitere der genannten Komponenten 42, 43,111,112, ganz oder teilweise eingebettet sein können.

Das Endgerät 50 verfügt über eine Außenkontaktfläche 53, die über eine geeignete Verbindung 51 elektrisch mit den Display 52 verbunden ist.

Die Zustimmungsvorrichtung 40 funktioniert wie folgt. Damit die Ansteuervorrichtung 30 eine Änderung des Ladungszustandes der Geberelemente 1111,112 bewirken kann, muss sie den bzw. die Schalter 42 ansteuern. Zudem muss zwischen Geberelementen 111,112 und Display 52 ein elektrischer Übergang möglich sein. Hierzu muss über die Rückkontaktfläche 41, das Endgerät 50 und das Display 52 ein Stromkreis zu den Geberelementen 111, 112 geschlossen werden. Zu diesem Zweck muss der Benutzer zum einen die Rückkontaktfläche 41 des Datenträgers 1 und zum anderen gleichzeitig eine leitend mit dem Display 52 verbundene Außenkontaktfläche 53 des Endgerätes 50 physisch berühren. Über den Körper des Nutzers wird dann, wie durch die Strichlinie angedeutet, ein Stromkreis geschlossen, damit ein Ladungsfluss zwischen den Geberelementen 111,112 und dem Display 52 und damit Ladungsänderungen möglich.

Mit einem wie vorstehend beschrieben ausgeführten Datenträger 1 ist eine Datenübertragung zwischen dem Datenträger 1 und einem Endgerät 50 möglich, die auf dem Prinzip beruht, über die kapazitiven Flächen der Geberelemente 111,112 elektrische Senken zu erzeugen, die einem Berühren mit einem Finger gleichgesetzt werden können. Die Kontaktierungsflächen der Geberelemente 111,112 verhalten sich auf der kapazitiven Fläche des Displays 52 passiv - d.h. sie sind hochohmig -, solange sie nicht mit einem festen Potenzial verbunden werden. Solange die Geberelemente 111,112 nicht aktiv von der Ansteuervorrichtung 30 angesteuert werden, befinden sie sich im sogenannten Tristate. Besitzt der Datenträger 1 etwa Kontaktelemente einerseits und eine Kontaktlosschnittstelle andererseits und befindet sich der Datenträger 1 im kontaktlosen Betrieb, so sind alle über die Kontaktelemente realisierten Eingänge im Tristate. Mit Hilfe von Software ist es der Ansteuervorrichtung 30 über die Schalter 42 möglich, die Kontaktierungsflächen der Geberelemente 111,112 auf einen festen Bezugspunkt zu schalten - und den Tristate damit aufzuheben. Durch den Wechsel zwischen den beiden Zuständen kann ein Datenträger 1, der auf dem kapazitiven Display 52 eines Endgeräts 50 aufliegt, auf den Kontaktierungsflächen wechselnde Signalpegel anlegen. Diese Pegelwechsel werden von dem kapazitiven Display 52 als Fingerberührung gewertet und der endgeräteseitigen Auswerteeinheit, also etwa der Displaysteuereinheit 55 gemeldet. Beispielsweise über das Verhältnis von Einschaltzeit zu einer bestimmten Zeiteinheit kann dann wiederum eine Signalübertragung realisiert werden.

Zur Verifikation einer dargestellten Information kann z.B. das in der WO 2009/019038 A1 beschriebene Verfahren verwendet werden.

Fig. 2 zeigt ein zweites Ausführungsbeispiel eines erfindungsgemäßen Datenträgers 1 in Gestalt einer Banknote bzw. eines Geldscheins. Beispielhaft ist schematisch ein Schein mit einer Denomination 20 dargestellt, der grundsätzlich, wie angedeutet, etwa einen 20 Euro-Schein sein kann. Der Geldschein umfasst ebenfalls ein Fensterelement 20, um das herum wiederum lediglich beispielhaft vier Geberelemente 11,12,13,14 angeordnet sind. Die Geberelemente 11,12,13,14 sind wie im vorangegangenen Ausführungsbeispiel mit einer Ansteuervorrichtung 30 verbunden. Diese ist direkt mit einer Antenne 36 in dem Geldschein gekoppelt, um eine drahtlose Kommunikationsschnittstelle sowie eine Energieversorgung der Ansteuervorrichtung 30 bereitzustellen. Die Schaltung in einem Geldschein ist somit derart aufgebaut, dass eine Energieentnahme direkt und ohne entkoppelte Spannungsversorgung eines NFC Feldes eines Endgeräts erfolgt. Dies ist möglich, da keine eigenständige NFC Kommunikation erfolgen muss. Die Ansteuervorrichtung ist so aufgebaut, dass je Geldschein ein bestimmter Informationsablauf auf den Geberelementen 11,12,13,14 erfolgt. Beispielsweise kann abwechselnd ein Schaltelement die Kapazität eines Geberelementes und damit dessen Kontaktfläche zu- bzw. abschalten.

Die Ausstattung einer Banknote mit einem Fensterelement 20 und einer Geberanordnung 10 erlaubt eine schnelle und sehr genaue Prüfung der Echtheit einer Banknote mithilfe eines entsprechenden Prüfgerätes.

Die Ausstattung eines Datenträgers mit einer erfindungsgemäß beschriebenen Geberanordnung und optional einem Fensterelement erlaubt eine Reihe von grundlegenden elektronischen Transaktionen. Unter anderem eignet sich die erfindungsgemäße Lösung zur Ausführung von Transaktionen, in denen ein Datenträger 1 mit einem Endgerät 50 kommuniziert, um über das Endgerät 50 eine elektronische Transaktion z.B. mit einem über ein an sich unsicheres Datennetz verbundenen Server durchzuführen.

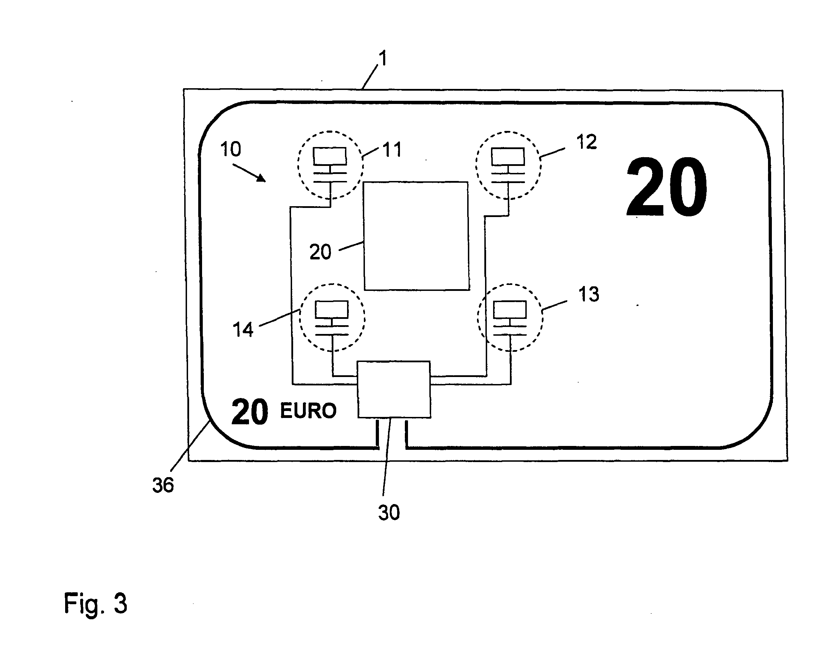

Fig. 3 veranschaulicht als Beispiel für eine elektronische Transaktion die Veranlassung der Übertragung eines Geldbetrages an einem Endgerät 50 von einem Konto eines Nutzers auf ein Konto eines durch einen Server repräsentierten Dienstanbieters mittels eines im Format einer Chipkarte ausgeführten Datenträgers 1; die Ausführungsform Chipkarte wird dabei nur zum Zwecke der Beschreibung angesetzt; andere Ausgestaltungen des Datenträgers 1 sind selbstverständlich möglich. Das Endgerät 50 verfügt über ein kapazitives Display 52.

Die Transaktion setzt ein, indem das Endgerät 50 auf dem Display 52 Informationen über die beabsichtigte Transaktion erzeugt. Beispielhaft ist auf dem kapazitiven Display 52 eine Information 54 dargestellt, mit der dem Besitzer der Chipkarte 1mitgeteilt wird, dass eine von ihm getätigte Transaktion einen Wert von z.B. 15,00 € hat und bei einem Dienstanbieter ""xyStore" in Gestalt eines - nicht gezeigten - Servers getätigt wird. Um die die Transaktion abzuschließen wird der Benutzer durch eine auf dem Display 52 ausgegebene Anzeige "Please present card!" aufgefordert, seine Chipkarte 1 auf das Display 52 des Endgerätes 50 zu legen. Der Benutzer legt darauf sein Chipkarte 1 auf das kapazitive Display 52 und die Transaktion wird wie nachfolgend näher beschrieben ausgeführt. Damit die Ausführung möglich ist kann vorgesehen sein, dass der Benutzer durch gleichzeitiges Berühren der Chipkarte 1 und des Endgerätes 50 zumindest vorübergehend einen physischen Kontakt zwischen beiden herstellt, um so einen Stromkreis zu schließen. Nach Durchführung der Werttransaktion wird dem Benutzer über das Display 52 z.B. mitgeteilt, dass die Transaktion erfolgreich abgeschlossen werden konnte: "Transaction completed".

Die genaue Ausführung der Transaktion bei aufgelegter Chipkarte 1 hängt davon ab, wie Chipkarte 1 und Endgerät 50 genau ausgestattet sind. In einer ersten Ausführungsvariante wird eine Chipkarte 1 zugrundegelegt, die eine Geberanordnung 10 sowie weiter ein Fensterelement20 aufweist. Das Endgerät 50 kann z.B. ein Mobilfunkendgerät, ein Tablet-PC oder ähnliches sein.

Die Transaktionsdaten werden von dem Endgerät 50 an den Server des Diensteanbieters übermittelt. Dieser bildet zu den Transaktionsdaten eine für die Transaktion spezifische Transaktionsinformation, für die nachfolgend beispielhaft eine Transaktionsnummer (TAN) angesetzt wird, und unterwirft sie einer mit einem kartenspezifischen Fensterschlüssel ausgeführten Bildverschlüsselung. Die Bildverschlüsselung bewirkt, dass eine unveränderte graphische Wiedergabe der bildverschlüsselten Transaktionsdaten auf einem Display 52 nicht lesbar ist. Ebenso können auch die Transaktionsdaten bildverschlüsselt werden. Die bildverschlüsselte Transaktionsnummer und ggf. die bildverschlüsselten Transaktionsdaten schickt der Server über einen separaten Kommunikationskanal zurück an das Endgerät 50, das sie auf seinem Display 52 anzeigt. Der separate Kommunikationskanal kann bspw. eine SMS sein. Das Fensterelement 20 des Datenträgers 1 ist dazu ausgebildet, die Bildverschlüsselung aufzuheben, indem nur bei lagerichtiger Überlagerung eine lesbare, verständliche Wiedergabe von Transaktionsnummer und ggf. Transaktionsdaten auf dem Display 52 erfolgt. Realisiert werden kann eine solche Verschlüsselung/Entschlüsselung in einfacher Weise beispielsweise mithilfe einer in das Fensterelement 20 eingearbeiteten Linsenstruktur, die nur dann ein gültiges, lesbares Bild liefert, wenn das wiederzugebende graphische Muster auf dem Display 52 in auf die Linsenstruktur besonders abgestimmter Weise dargestellt ist.

In einer Abwandlung der ersten Ausführungsvariante wird eine Chipkarte 1 mit Geberanordnung 10, jedoch ohne Fensterelement eingesetzt. Die Transaktionsdaten werden wieder an einen Server eines Diensteanbieters übermittelt, der zu den Transaktionsdaten eine Transaktionsnummer (TAN) bildet und diese über einen separaten Kommunikationskanal an das Endgerät 50 zurückschickt, welches sie auf seinem Display 52 anzeigt. Im Unterschied zur ersten Ausführungsvariante erfolgt bei dieser Variante keine Bildverschlüsselung. Stattdessen erfolgt die Ausgabe der Transaktionsnummer und ggf. der Transaktionsdaten in einem bestimmten Bezug zu der Chipkarte 1. Das Endgerät 50 bestimmt dazu zunächst die genaue Lage der Chipkarte 1 auf dem Display 52 und gibt anschlie0end die Transaktionsnummer sowie ggf. die Transaktionsdaten in Abstimmung auf die festgestellte Lage so aus, dass sie außerhalb der von der Chipkarte 1 überdeckten Fläche des Displays 52 in einem definierten Bezug zu der Chipkarte 1 erscheinen. Beispielsweise kann die Wiedergabe der Transaktionsnummer und ggf. der Transaktionsdaten über einer bestimmten Längskante der Chipkarte 1 in zu der Längskante paralleler Ausrichtung erfolgen. Die Wiedergabe kann zudem auf Markierungen abgestimmt sein, die auf der Chipkarte 1 angebracht sind. Eine abweichende Ausrichtung oder einer Fehlanpassung an die Markierungen zeigen dann eine unzulässige, nicht vertrauenswürdige Wiedergabe an.

In einer zweiten Ausführungsvariante wird eine nur mit einer Geberanordnung ausgestattete Chipkarte 1 ohne Fensterelement eingesetzt. Die Transaktionsdaten werden nun über eine kontaktlose Schnittstelle der Chipkarte 1, bspw. die NFC Schnittstelle, von dem Endgerät 50 an die Chipkarte 1 übertragen. Die Chipkarte 1 generiert darauf z.B. eine Transaktionsnummer und schickt diese über die Geberelemente an das Endgerät 50 zurück. Das Endgerät 50 überträgt die vollständigen Daten, bestehend aus Transaktionsnummer und Transaktionsdaten schließlich an einen Server zur weiteren Verarbeitung.

In einer dritten Ausführungsvariante wird eine Chipkarte 1 zugrunde gelegt, der eine Geberanordnung sowie zusätzlich einen Rückkanal aufweist. Über den Rückkanal schickt das Endgerät 50 Transaktionsdaten an die Chipkarte. Die Chipkarte 1 generiert darauf z.B. eine Transaktionsnummer und schickt diese über die Geberanordnung an das Endgerät 50 zurück. Dieses leitet sie anschließend an den Server des Diensteanbieters. Weist die Chipkarte 1 Datenträger 1 zusätzlich ein Fensterelement auf, kann dieses in einfacher Weise dazu dienen, die Funktionsfähigkeit der Chipkarte 1 zu beweisen, indem die Transaktionsdaten so ausgerichtet werden, dass sie genau in dem Fensterelement erscheinen.

In einer Ausführungsvariante mit derselben Datenträgergestaltung erfolgt die Übertragung der Transaktionsdaten nicht über den Rückkanal, sondern über eine kontaktlose Schnittstelle der Chipkarte 1, bspw. über eine NFC Schnittstelle 36, wie in Fig. 1 angedeutet. Über den Rückkanal findet eine Authentisierung zwischen der Chipkarte 1 und dem Endgerät 50 statt. Eine Authentisierung ist vor allem dann sinnvoll, wenn das Endgerät 50 über eine besonders gesicherte Laufzeitumgebung verfügt, so dass insbesondere das Ergebnis einer von einer solchen gesicherten Laufzeitumgebung vorgenommene Authentisierung vertrauenswürdig ist. Derartige gesicherte Laufzeitumgebungen lassen sich z.B. auf einem integrierten, gegenüber einem Endgerät 50 aber grundsätzlich autarken Sicherheitselement realisieren, das beispielsweise eine SIM-Karte sein kann.

Eine solche Authentisierung durch eine gesicherte Laufzeitumgebung ist ferner auch dann sinnvoll, wenn der Datenträger 1 keinen Rückkanal über das Display 52 ermöglicht. Der Datenaustausch erfolgt dann z.B. über eine kontaktlose Schnittstelle zu der Chipkarte 1 und über die Geberanordnung zu dem Endgerät 50.

## Patentansprüche

1. Verfahren zur Interaktion eines tragbaren Datenträgers (1) mit einem Endgerät (50), wobei
- der Datenträger (1) eine Geberanordnung (10) mit mindestens einem oder einem Satz von kapazitiven Geberelementen (11,12,13, 14), welche in Bezug auf die Geometrie des Datenträgers (1) an definierten Positionen auf oder in dem Datenträger (1) angeordnet sind, und der Datenträger mit Energie versorgt wird;
- das Endgerät (50) ein kapazitives Display (52) mit einer berührungsempfindlichen Anzeige umfasst,
bei dem der Datenträger (1) auf das Display (52) aufgelegt und über die kapazitiven Geberelemente (11,12,13,14) Signale erzeugt werden, die von dem Endgerät (50) aufgenommen und als Eingangssignale ausgewertet werden, wobei
die zur Ansteuerung der Geberelemente (11,12,13,14) benötigte Energie durch eine interne Energieversorgung des Datenträgers (1) bereitgestellt oder durch induktive Kopplung über eine kontaktlose Schnittstelle (34, 36) von dem Endgerät (50) übertragen wird, und das Endgerät (50) durch Auswertung der Eingangssignale die genaue Lage des Datenträgers (1) auf dem Display (52) ableitet.

2. Verfahren nach Anspruch 1, bei dem der Datenträger (1) eine kontaktbehaftete Schnittstelle (38) mit mehreren Kontaktfeldern umfasst, welche als Teil der kapazitiven Geberelemente (11, 12, 13, 14) verwendet werden, an denen die Signale für das Display (52) erzeugt werden.

3. Verfahren nach einem der vorhergehenden Ansprüche, bei dem zur Ansteuerung der Geberelemente (11,12,13,14) durch eine Ansteuervorrichtung (30) Ladungsänderungen in einer Größenordnung von 1 pF bis 1 nF, vorzugsweise in einer Größenordnung von weniger als 2 pF, auf den Geberelementen (11,12,13,14) hervorgerufen werden.

4. Verfahren nach einem der vorhergehenden Ansprüche, bei dem der Datenträger (1) ein Fensterelement (20) umfasst, in Bezug auf das die Geberelemente (11,12,13,14) an definierten Positionen auf oder in dem Datenträger (1) angeordnet sind, wobei das Endgerät (50) nach Ableitung der genauen Lage des Datenträgers (1) auf dem Display (52) eine inhaltliche Informationen ausgibt, welche lagerichtig zu dem Fensterelement (20) ist.

5. Verfahren nach einem der vorhergehenden Ansprüche, bei dem über die Geberelemente (11,12,13,14) ein Signalaustausch von dem Display (52) zu dem Datenträger (1) erfolgt, indem durch das Display (52) ortsabhängig Testsignalfolgen erzeugt werden, die von den als Sensoren betriebenen Geberelementen (11,12,13,14) erfasst und durch den Datenträger (1) als Eingangssignale ausgewertet werden.

6. Verfahren nach Anspruch 5, bei dem die kapazitive Ansteuerung des Displays (52) des Endgeräts (50) insgesamt an- und ausgeschaltet wird.

7. Verfahren, nach einem der vorhergehenden Ansprüche, bei dem ein Signalaustausch von dem Display (52) zu dem Datenträger (1) erfolgt, indem der Datenträger (1) mit einem Beschleunigungssensor ausgestattet wird und das Display (52) intermittierend zu Vibrationen angeregt wird, die die von Beschleunigungssensor erfasst und durch den Datenträger als Eingangssignale ausgewertet werden.

8. Verfahren nach einem der vorhergehenden Ansprüche, bei dem zur Durchführung einer sicherheitskritischen elektronischen Transaktion an dem Endgerät (50) Transaktionsdaten an einen Server übertragen werden, der eine Transaktionsnummer bildet und mit einem für den Datenträger (50) spezifischen Schlüssel als Bild verschlüsselt und zusammen mit den die Transaktionsdaten über einen separaten Kanal an das Endgerät (50) überträgt, wobei die bildverschlüsselten Daten auf dem Display (52) des Endgeräts (50) angezeigt werden und bei lagerichtiger Überlagerung des Fensterelementes (20) mit den auf dem Display (52) angezeigten bildverschlüsselten Daten eine Entschlüsselung der bildverschlüsselten Daten erfolgt.

9. Verfahren nach einem der vorhergehenden Ansprüche, bei dem zur Durchführung einer sicherheitskritischen Transaktion an dem Endgerät (50) Transaktionsdaten über die Geberelemente (11,12,13,14) den Datenträger (1) übertragen werden.

10. Verfahren nach Anspruch 7 oder 8, bei dem durch den Datenträger (1) eine für die Transaktion spezifische Transaktionsinformation erzeugt und wahlweise über die kontaktlose Schnittstelle (34, 36, 38) oder die Geberelemente (11,12,13,14) an das Endgerät (50) übertragen wird, welches die Transaktionsdaten zusammen mit der Transaktionsinformation an einen Server zur weiteren Verarbeitung, insbesondere über einen gesicherten Kanal, überträgt.

11. Verfahren nach einem der Ansprüche 8 bis 10, bei dem für den Beweis der Funktionsfähigkeit des Datenträgers (1) gegenüber einem Benutzer die Transaktionsdaten auf dem Display (52) des Endgeräts (50) derart dargestellt werden, dass diese in dem Fensterelement (20) des Datenträgers (1) erscheinen.

12. Verfahren, nach einem der vorhergehenden Ansprüche, **dadurch gekennzeichnet, dass** eine Signalübertragung von dem Datenträger (1) zu einem Display (52) nur möglich ist, wenn über den Benutzer ein Stromkreis zwischen Datenträger (1) und Endgerät (50) geschlossen wird.

13. Datenträger (1) zur Interaktion mit einem Endgerät (50) gemäß einem der Ansprüche 1 bis 12, umfassend
- eine Geberanordnung (10) mit mindestens einem oder einem Satz von kapazitiven Geberelementen (11,12,13,14), welche in Bezug auf die Geometrie des Datenträgers (1) an definierten Positionen auf oder in dem Datenträger (1) angeordnet sind;
- eine eigene Energieversorgung (32) oder eine kontaktlose Schnittstelle (34,36), über die durch induktive Kopplung Energie von dem Endgerät (50) übertragen wird, und
- eine mit der Energieversorgung (32) verbundene Ansteuervorrichtung (30), welche dazu ausgebildet ist den Ladungszustand der kapazitiven Geberelemente (11,12,13,14) gezielt zu verändern.

14. Datenträger nach Anspruch 13, der zusätzlich ein Fensterelement (20) umfasst, in Bezug auf das die Geberelemente (11,12,13,14) an definierten Positionen auf oder in dem Datenträger (1) angeordnet sind.

15. Datenträger nach einem der Ansprüche 13 oder 14, der eine Rückkontaktfläche (41) sowie einen Schalter (42) als Zustimmungsvorrichtung aufweist, wobei der Schalter (42) mit der Rückkontaktfläche (41) und mindestens einem Geberelement (111, 112) verbunden ist, wobei durch Betätigung des Schalters (42) eine Änderung des Potentials des mindestens einen damit verbundenen Geberelement (11,12,13,14) möglich ist, wenn ein Benutzer durch gleichzeitiges Berühren einer mit dem Display verbundenen Außenkontaktfläche eine elektrisch leitfähige Verbindung zwischen Rückkontaktfläche (41) und dem Endgerät (50) erzeugt.

16. Endgerät zur Interaktion mit einem Datenträger (1) gemäß einem der Ansprüche 1 bis 15, wobei das Endgerät (50) dazu ausgebildet ist, durch Auswertung der Signale der Geberelemente (11,12,13,14) die genaue Lage des Datenträgers (1) auf dem Display (52) abzuleiten.

17. Endgerät nach Anspruch 16, das dazu ausgebildet ist, auf dem Display (52) eine inhaltliche Informationen auszugeben, welche lagerichtig zu dem Fensterelement (20) des Datenträgers (1) ist.

18. Endgerät nach Anspruch 16, das eine Außenkontaktfläche (52) aufweist, die elektrisch leitend mit dem Display (52) verbunden ist.

19. System zur Interaktion eines tragbaren Datenträgers mit einem Endgerät (50), umfassend mindestens einen Datenträger (1) gemäß einem der Ansprüche 13 bis 15 sowie mindestens ein Endgerät (50) gemäß einem der Ansprüche 16 bis 18.

## Claims

1. A method for interaction of a portable data carrier (1) with an end device (50), wherein
- the data carrier (1) comprises a transducer arrangement (10) having at least one or a set of capacitive transducer elements (11, 12, 13, 14) which are arranged on or in the data carrier (1) at defined positions in relation to the geometry of the data carrier (1), and the data carrier is supplied with energy;
- the end device (50) comprises a capacitive display screen (52) having a touch-sensitive display,
wherein the data carrier (1) is placed onto the display screen (52) and via the capacitive transducer elements (11, 12, 13, 14) there are generated signals which are picked up and evaluated as input signals by the end device (50),
**characterized in that**
the energy required for driving the transducer elements (11, 12, 13, 14) is made available through an internal energy supply of the data carrier (1) or transmitted from the end device (50) via a contactless interface (34, 36) through inductive coupling, and the end device (50) derives the exact position of the data carrier (1) on the display screen (52) through evaluation of the input signals.

2. The method according to claim 1, wherein the data carrier (1) comprises a contact-type interface (38) having several contact pads which are employed as part of the capacitive transducer elements (11, 12, 13, 14) on which the signals are generated for the display screen (52).

3. The method according to either of the preceding claims, wherein for driving the transducer elements (11, 12, 13, 14) a drive apparatus (30) causes changes of charge in an order of magnitude of 1 pF to 1 nF, preferably in an order of magnitude of less than 2 pF, on the transducer elements (11, 12, 13, 14).

4. The method according to any of the preceding claims, wherein the data carrier (1) comprises a window element (20) in relation to which the transducer elements (11, 12, 13, 14) are arranged at defined positions on or in the data carrier (1), wherein the end device (50), after deriving the exact position of the data carrier (1) on the display screen (52), outputs a content information item which is correctly positioned relative to the window element (20).

5. The method according to any of the preceding claims, wherein there is effected via the transducer elements (11, 12, 13, 14) a signal exchange from the display screen (52) to the data carrier (1), by test signal sequences being generated location-dependently through the display screen (52), said sequences being detected by the transducer elements (11, 12, 13, 14) operated as sensors, and evaluated as input signals through the data carrier (1).

6. The method according to claim 5, wherein the capacitive drive of the display screen (52) of the end device (50) is switched on and off as a whole.

7. The method according to any of the preceding claims, wherein a signal exchange is effected from the display screen (52) to the data carrier (1) by the data carrier (1) being equipped with an acceleration sensor and the display screen (52) being intermittently excited to vibrate, the vibrations being detected by the acceleration sensor and evaluated as input signals through the data carrier.

8. The method according to any of the preceding claims, wherein for carrying out a security-critical electronic transaction on the end device (50), transaction data are transferred to a server which forms a transaction number and encrypts it as an image with a key specific to the data carrier (50) and transfers it to the end device (50) together with the transaction data via a separate channel, the image-encrypted data being displayed on the display screen (52) of the end device (50) and a decryption of the image-encrypted data being effected in the case of correctly positioned superimposition of the window element (20) with the image-encrypted data displayed on the display screen (52).

9. The method according to any of the preceding claims, wherein for carrying out a security-critical transaction on the end device (50), transaction data are transferred to the data carrier (1) via the transducer elements (11, 12, 13, 14).

10. The method according to claim 7 or 8, wherein through the data carrier (1) a transaction information item specific to the transaction is generated and transferred selectively via the contactless interface (34, 36, 38) or the transducer elements (11, 12, 13, 14) to the end device (50), which transfers the transaction data together with the transaction information item to a server for further processing, in particular via a secure channel.

11. The method according to any of claims 8 to 10, wherein for proof of the operability of the data carrier (1) towards a user, the transaction data are represented on the display screen (52) of the end device (50) such that they appear in the window element (20) of the data carrier (1).

12. The method according to any of the preceding claims, **characterized in that** a signal transmission from the data carrier (1) to a display screen (52) is only possible when a circuit between data carrier (1) and end device (50) is closed via the user.

13. A data carrier (1) for interaction with an end device (50) according to any of claims 1 to 12, comprising
- a transducer arrangement (10) having at least one or a set of capacitive transducer elements (11, 12, 13, 14) which are arranged on or in the data carrier (1) at defined positions in relation to the geometry of the data carrier (1);
- a dedicated energy supply (32) or a contactless interface (34, 36) via which energy is transmitted from the end device (50) through inductive coupling, and
- a drive apparatus (30) connected to the energy supply (32) and configured for changing the charge state of the capacitive transducer elements (11, 12, 13, 14) in a targeted manner.

14. The data carrier according to claim 13, which additionally comprises a window element (20) in relation to which the transducer elements (11, 12, 13, 14) are arranged at defined positions on or in the data carrier (1).

15. The data carrier according to either of claims 13 to 14, which has a back contact area (41) as well as a switch (42) as a consent apparatus, the switch (42) being connected to the back contact area (41) and at least one transducer element (111, 112), with a change of the potential of the at least one transducer element (11, 12, 13, 14) connected thereto being possible, through actuation of the switch (42), when a user produces an electrically conductive connection between back contact area (41) and the end device (50) by simultaneously touching an outside contact area connected to the display screen.

16. An end device for interaction with a data carrier (1) according to any of claims 1 to 15, wherein the end device (50) is configured for deriving the exact position of the data carrier (1) on the display screen (52) through evaluation of the signals of the transducer elements (11, 12, 13, 14).

17. The end device according to claim 16, which is configured for outputting on the display screen (52) a content information item which is correctly positioned relative to the window element (20) of the data carrier (1).

18. The end device according to claim 16, which has an outside contact area (52) which is connected electroconductively to the display screen (52).

19. A system for interaction of a portable data carrier with an end device (50), comprising at least one data carrier (1) according to any of claims 13 to 15 as well as at least one end device (50) according to any of claims 16 to 18.

## Revendications

1. Procédé d'interaction d'un support de données (1) portable avec un terminal (50), dans lequel
- le support de données (1) comporte un agencement d'émetteurs (10) ayant au moins un ou un jeu d'éléments d'émetteurs capacitifs (11, 12, 13, 14) qui, relatif à la géométrie du support de données (1), sont agencés à des positions définies sur ou dans le support de données (1), et le support de données étant alimenté en énergie;
- le terminal (50) comprenant un écran capacitif (52) ayant un afficheur tactile,
dans lequel le support de données (1) est placé sur l'écran (52) et, par le biais des éléments d'émetteurs capacitifs (11, 12, 13, 14), des signaux sont générés, qui sont réceptionnés par le terminal (50) et évalués en tant que signaux d'entrée,
l'énergie nécessaire à la commande des éléments d'émetteurs (11, 12, 13, 14) étant mise à disposition par une alimentation interne en énergie du support de données (1) ou étant transmise par le terminal (50) par couplage inductif par le biais d'une interface (34, 36) sans contact, et le terminal (50) déduisant, par évaluation des signaux d'entrée, la position précise du support de données (1) sur l'écran (52).

2. Procédé selon la revendication 1, dans lequel le support de données (1) comprend une interface avec contact (38) ayant plusieurs champs de contact qui sont utilisés en tant que partie des éléments d'émetteurs capacitifs (11, 12, 13, 14) et sur lesquels les signaux destinés à l'écran (52) sont générés.

3. Procédé selon une des revendications précédentes, dans lequel, pour la commande des éléments d'émetteurs (11, 12, 13, 14) par un dispositif de commande (30), des variations de charge de l'ordre de 1 pF à 1nF, de préférence de l'ordre de moins de 2 pF, sont engendrées sur les éléments d'émetteurs (11, 12, 13, 14).

4. Procédé selon une des revendications précédentes, dans lequel le support de données (1) comprend un élément fenêtre (20) en fonction duquel les éléments d'émetteurs (11, 12, 13, 14) sont agencés à des positions définies sur ou dans le support de données (1), le terminal (50) éditant, après déduction de la position précise du support de données (1) sur l'écran (52), une information de contenu qui est en position correcte par rapport à l'élément fenêtre (20).

5. Procédé selon une des revendications précédentes, dans lequel, par le biais des éléments d'émetteurs (11, 12, 13, 14), un échange de signaux a lieu de l'écran (52) au support de données (1), ce qui est obtenu par le fait que, par l'écran (52), des séquences de signaux de test sont générées en dépendance de la localisation, puis sont saisies par les éléments d'émetteurs (11, 12, 13, 14) exploités comme capteurs et évaluées par le support de données (1) en tant que signaux d'entrée.

6. Procédé selon la revendication 5, dans lequel la commande capacitive de l'écran (52) du terminal (50) est dans son ensemble connectée et déconnectée.

7. Procédé selon une des revendications précédentes, dans lequel un échange de signaux a lieu de l'écran (52) au support de données (1), ce qui est obtenu par le fait que le support de données (1) est équipé d'un capteur d'accélération et en ce que l'écran (52) est induit de façon intermittente à des vibrations qui sont saisies par le capteur d'accélération et évaluées par le support de données en tant que signaux d'entrée.

8. Procédé selon une des revendications précédentes, dans lequel, pour l'exécution d'une transaction électronique critique pour la sécurité sur le terminal (50), des données de transaction sont transmises à un serveur qui compose un numéro de transaction, le crypte sous forme d'image avec une clé spécifique pour le support de données (50) et le transmet en même temps que les données de transaction par un canal distinct au terminal (50), les données cryptées sous forme d'image étant affichées sur l'écran (52) du terminal (50) et, dans le cas d'une superposition en position correcte de l'élément fenêtre (20) par rapport aux données cryptées sous forme d'image affichées sur l'écran (52), un décryptage des données cryptées sous forme d'image ayant lieu.

9. Procédé selon une des revendications précédentes, dans lequel, pour l'exécution d'une transaction critique pour la sécurité sur le terminal (50), des données de transaction sont transmises par le biais des éléments d'émetteurs (11, 12, 13, 14) au support de données (1).

10. Procédé selon la revendication 7 ou 8, dans lequel, par le support de données (1), une information de transaction spécifique pour la transaction est générée et est transmise au choix par le biais de l'interface (34, 36, 38) sans contact ou des éléments d'émetteurs (11, 12, 13, 14) au terminal (50) qui transmet les données de transaction en même temps que l'information de transaction à un serveur pour traitement subséquent, notamment par un canal sécurisé.

11. Procédé selon une des revendications de 8 à 10, dans lequel, pour prouver l'aptitude à fonctionner du support de données (1) vis-à-vis d'un utilisateur, les données de transaction sont représentées de telle façon sur l'écran (52) du terminal (50) que ces dernières apparaissent dans l'élément fenêtre (20) du support de données (1).

12. Procédé selon une des revendications précédentes, **caractérisé en ce qu'**une transmission de signaux du support de données (1) à l'écran (52) n'est possible que quand, par l'intermédiaire de l'utilisateur, un circuit électrique entre support de données (1) et terminal (50) est fermé.

13. Support de données (1) destiné à l'interaction avec un terminal (50) selon une des revendications de 1 à 12, comprenant
- un agencement d'émetteurs (10) ayant au moins un ou un jeu d'éléments d'émetteurs capacitifs (11, 12, 13, 14) qui, relatif à la géométrie du support de données (1), sont agencés à des positions définies sur ou dans le support de données (1);
- une propre alimentation en énergie (32) ou une interface (34, 36) sans contact par le biais de laquelle, par couplage inductif, de l'énergie est transmise par le terminal (50) et
- un dispositif de commande (30) raccordé à l'alimentation en énergie (32) et conçu pour changer à dessein l'état de charge des éléments d'émetteurs capacitifs (11, 12, 13, 14).

14. Support de données (1) selon la revendication 13, qui comprend en outre un élément fenêtre (20) en fonction duquel les éléments d'émetteurs (11, 12, 13, 14) sont agencés à des positions définies sur ou dans le support de données (1).

15. Support de données selon une des revendications 13 ou 14, qui comporte une surface à contact arrière (41) ainsi qu'un commutateur (42) en tant que dispositif d'approbation, le commutateur (42) étant raccordé à la surface à contact arrière (41) et à au moins un élément d'émetteur (111, 112), cependant que, par actionnement du commutateur (42), une variation du potentiel du au moins un élément d'émetteur (11, 12, 13, 14) raccordé avec lui est possible quand un utilisateur, par attouchement d'une surface à contact extérieur raccordée à l'écran, génère un raccordement électroconducteur entre la surface à contact arrière (41) et le terminal (50).

16. Terminal destiné à l'interaction avec un support de données (1) selon une des revendications de 1 à 15, le terminal (50) étant conçu pour déduire, par évaluation des signaux des éléments d'émetteurs (11, 12, 13, 14), la position précise du support de données (1) sur l'écran (52).

17. Terminal selon la revendication 16 qui est conçu pour éditer sur l'écran (52) une information de contenu qui est en position correcte par rapport à l'élément fenêtre (20) du support de données (1).

18. Terminal selon la revendication 16, qui comporte une surface à contact extérieur (52) raccordée à l'écran (52) de manière électroconductrice.

19. Système d'interaction d'un support de données portable avec un terminal (50), comprenant au moins un support de données (1) selon une des revendications de 13 à 15 ainsi qu'au moins un terminal (50) selon une des revendications de 16 à 18.
